(19) Europäisches Patentamt / European Patent Office / Office européen des brevets

(11) **EP 4 707 816 A1**

(12) **EUROPEAN PATENT APPLICATION**

(43) Date of publication:
**11.03.2026 Bulletin 2026/11**

(21) Application number: **25189893.8**

(22) Date of filing: **16.07.2025**

(51) International Patent Classification (IPC):
**G01P 3/64** $^{(2006.01)}$    **G01P 21/02** $^{(2006.01)}$
**G01M 17/007** $^{(2006.01)}$

(52) Cooperative Patent Classification (CPC):
**G01P 21/02; G01M 17/007; G01P 3/64**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.09.2024 JP 2024151964**

(71) Applicant: **TOYOTA JIDOSHA KABUSHIKI
KAISHA
Toyota-shi, Aichi-ken 471-8571 (JP)**

(72) Inventors:
• **KOIDE, Toshihiro
Toyota-shi, 471-8571 (JP)**
• **SHIMIZU, Koji
Toyota-shi, 471-8571 (JP)**
• **KOYAMA, Keisuke
Toyota-shi, 471-8571 (JP)**

(74) Representative: **J A Kemp LLP
80 Turnmill Street
London EC1M 5QU (GB)**

(54) **INSPECTION METHOD OF A VEHICLE**

(57)    In an inspection method, a target pulse number indicating a number of a plurality of pulses in accordance with rotation of a wheel of a vehicle is acquired. The plurality of pulses is output from a sensor while the vehicle runs a predetermined reference distance. The acquired target pulse number and a predetermined reference pulse number are compared to one another to determine an abnormality related to vehicle speed of the vehicle.

EP 4 707 816 A1

## Description

BACKGROUND

FIELD

The present disclosure relates to an inspection method.

RELATED ART

Japanese Translation of PCT International Application Publication No. JP-T-2017-538619 discloses a technology to cause a vehicle to self-run autonomously or by remote control in a production step of the vehicle.
Vehicle speed inspection that is inspection related to vehicle speed is performed on a vehicle. In conventional vehicle speed inspection, a wheel of a vehicle is rotated on a roller that is rotatable while supporting the wheel of the vehicle, and a vehicle speed instruction value indicated by a vehicle speedometer and circumferential speed of the roller are compared. Therefore, in the conventional vehicle speed inspection, a roller device including such a roller is necessary. However, a technology that enables vehicle speed inspection to be performed without use of a roller device is desired.

SUMMARY

The present disclosure is feasible as the following aspects.

(1) According to one aspect of the present disclosure, an inspection method is provided. This inspection method includes acquiring a target pulse number indicating a number of a plurality of pulses in accordance with rotation of a wheel of a vehicle. The plurality of pulses is output from a sensor while the vehicle runs a predetermined reference distance. The acquired target pulse number and a predetermined reference pulse number are compared to determine an abnormality related to vehicle speed of the vehicle.
According to this aspect, vehicle speed inspection can be performed without use of a roller device including a roller rotatable while the roller supports the wheel of the vehicle.
(2) In the above-described aspect, at least one of the plurality of pulses may be output while the vehicle runs from a first place toward a second place. The first place may be a place at which first work related to the vehicle is performed. The second place may be a place at which second work related to the vehicle is performed, the second work being subsequent to the first. According to this aspect, vehicle speed inspection can be performed while the vehicle moves from the first place toward the second place. Therefore, as compared with a case in which such position move and the vehicle speed inspection are performed separately from one another, the position move and the vehicle speed inspection can be performed efficiently.
(3) In the above-described aspect, at least one of the plurality of pulses may be output while inspection related to the vehicle and not affecting the vehicle speed is performed. According to this aspect, vehicle speed inspection and another inspection not affecting the vehicle speed can be performed in parallel. Therefore, as compared with a case in which the vehicle speed inspection and the another inspection are performed separately from one another, each inspection can be performed efficiently.
(4) In the above-described aspect, the plurality of pulses may be output while the vehicle runs at the vehicle speed of equal to or less than 10 km/h. According to this aspect, vehicle speed inspection can be performed while the vehicle runs at comparatively low speed.
(5) In the above-described aspect, when the vehicle has the abnormality, the vehicle may be caused to run by unmanned driving to a repair place at which the abnormality is to be repaired. The plurality of pulses may be output while the vehicle runs by the unmanned driving. According to this aspect, vehicle speed inspection and moving of the vehicle to the repair place can be performed without relying on an occupant of the vehicle.

The present disclosure can be implemented in aspects other than the aspect as the inspection method described above. For example, the present disclosure can be implemented in aspects, such as an inspection system, an inspection device, a vehicle, a program to implement an inspection method, a non-transitory recording medium recording a program, and a program product. Note that the program product may be provided as, for example, a recording medium recording a program, or a program product distributable via a network.

BRIEF DESCRIPTION OF THE DRAWINGS

Fig. 1 is a conceptual diagram illustrating a configuration of a system according to a first embodiment;
Fig. 2 is a block diagram illustrating a configuration of the system according to the first embodiment;
Fig. 3 is a flowchart illustrating a procedure for running control of a vehicle according to the first embodiment;
Fig. 4 is a flowchart illustrating a vehicle speed inspection method;
Fig. 5 is an explanatory diagram illustrating an execution example of the vehicle speed inspection method;
Fig. 6 is an explanatory diagram illustrating a schematic configuration of a system according to a second embodiment; and

Fig. 7 is a flowchart illustrating a procedure for running control of a vehicle according to the second embodiment.

DETAILED DESCRIPTION

A. First Embodiment

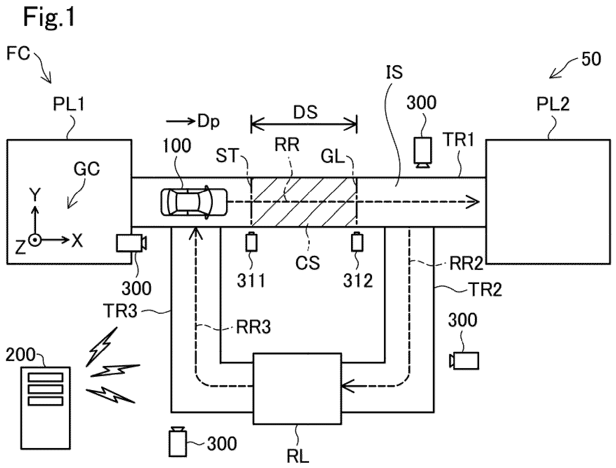

Fig. 1 is a conceptual diagram illustrating a configuration of a system 50 according to a first embodiment. The system 50 includes one or more vehicles 100, a server 200, and one or more external sensors 300. In the present embodiment, the system 50 is used as a running system that causes the vehicle 100 to run by unmanned driving and an inspection system that executes vehicle speed inspection on the vehicle 100. The vehicle speed inspection is inspection related to vehicle speed.

The vehicle 100 may be a vehicle to run with a wheel or may be a vehicle to run with a continuous track, and may be a passenger car, a truck, a bus, a two-wheel vehicle, a four-wheel vehicle, or a construction vehicle, for example. The vehicle 100 includes a battery electric vehicle (BEV), a gasoline automobile, a hybrid automobile, and a fuel cell automobile.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In the present embodiment, the system 50 is used in a factory FC where the vehicle 100 is produced. In the present embodiment, the reference coordinate system of the factory FC is a global coordinate system GC and a location in the factory can be expressed by X, Y, and Z coordinates in the global coordinate system GC. The factory FC includes a first place PL1 and a second place PL2. The first place PL1 and the second place PL2 are connected to one another through a track TR1 on which the vehicle 100 is runnable. In the factory FC, a plurality of external sensors 300 is disposed along a track inside the factory FC. Positions of the respective external sensors 300 in the factory FC are adjusted in advance. The vehicle 100 moves by unmanned driving from the first place PL1 to the second place PL2 through the track TR1.

The first place PL1 and the second place PL2 correspond to a work place where work related to the vehicle 100 is performed. In the first place PL1, first work related to the vehicle 100 is performed. In the second place PL2, second work related to the vehicle 100 is performed. The second work is work subsequent to the first work and corresponds to a post-step of the first work. In the present embodiment, the first work is assembling of the vehicle 100. The second work is inspection subsequent to the vehicle speed inspection. The first work and the second work may be, other than assembling and inspection, various types of work, such as assembling of a component to the vehicle 100, and maintenance, repair, standby, and shipping of the vehicle 100.

An inspection section CS is disposed inside the factory FC. In the present embodiment, the inspection section CS is part of the track TR1. The inspection section CS includes a starting point ST and a terminal point GL. In a direction Dp from the first place PL1 toward the second place PL2, the terminal point GL is positioned on a front side of the starting point ST. The length of the inspection section CS, more specifically, a distance between the starting point ST and the terminal point GL corresponds to a predetermined reference distance DS.

A first sensor 311 and a second sensor 312 are disposed in the factory FC. The first sensor 311 is used to detect arrival of the vehicle 100 at the starting point ST. The second sensor 312 is used to detect arrival of the vehicle 100 at the terminal point GL. The first sensor 311 corresponds to a sensor that detects the vehicle 100 entering the inspection section CS. The second sensor 312 corresponds to a sensor that detects the vehicle 100 exiting from the inspection section CS. As the first sensor 311 and the second sensor 312, for example, photoelectric sensors are used. Note that in another embodiment, the external sensor 300 may be used to detect the vehicle 100 entering or exiting from the inspection section CS.

In the present embodiment, in the inspection section CS, predetermined inspection not affecting vehicle speed of the vehicle 100 is performed. The predetermined inspection is, for example, inspection on various electronic components provided to the vehicle 100, and includes on-board diagnostics (OBD), inspection on each switch, and the like. In the OBD, the vehicle 100 is inspected based on a diagnostic trouble code (DTC). The OBD is also referred to as diagnosis. In the switch inspection, a connection state and/or an operation state of various switches are inspected. The various switches are used to cause various types of equipment, such as a hazard light, a blinker, a wiper, and a power window, to operate. For example, the predetermined inspection may be executed by a remote control unit 210 described later, executed by an occupant of the vehicle 100, or executed by a robot inside or outside of the vehicle 100.

In the present embodiment, the factory FC includes a repair place RL. The repair place RL is a place to repair a vehicle speed abnormality of the vehicle 100. The vehicle speed abnormality is an abnormality related to vehicle speed. More specifically, the vehicle speed abnormality is an abnormality that causes a vehicle speed deviation. The vehicle speed deviation means a deviation between actual speed and a vehicle speed instruction value of the vehicle 100, and indicates a state in which difference between the actual speed and the vehicle speed instruction value of the vehicle 100 is out of a predetermined standard range. For example, the vehicle speed abnormality includes at least any of an abnormality of a wheel, an abnormality of a vehicle speed sensor 141, and an abnormality of a pulse measurement unit described later. The repair place RL is connected to the track TR1 through a track TR2 and a track TR3. The track TR2 couples a front-side portion of the track TR1 with respect to the terminal point GL in the direction Dp to the repair place RL. An intersection point between the track TR2 and the track TR1 is also referred to as an intersection point IS. The track TR3 couples a rear-side portion of the track TR1 with respect to the starting point ST in the direction Dp to the repair place RL.

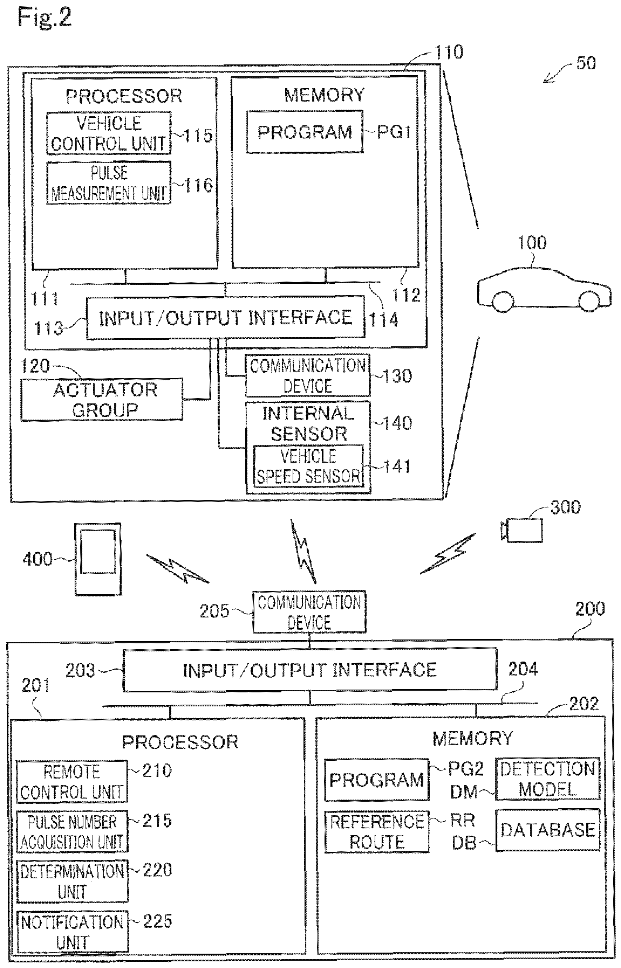

Fig. 2 is a block diagram illustrating a configuration of the system 50. The vehicle includes a vehicle control device 110 to control each part of the vehicle 100, an actuator group 120 including one or more actuators that perform driving under control of the vehicle control device 110, a communication device 130 to communicate with an external device, such as the server 200, by wireless communication, and an internal sensor 140. The actuator group 120 includes an actuator of a driving device for accelerating the vehicle 100, an actuator of a steering device for changing a traveling direction of the vehicle 100, and an actuator of a braking device for decelerating the vehicle 100.

The internal sensor 140 is a sensor installed on the vehicle 100. The internal sensor 140 includes the vehicle speed sensor 141. The internal sensor 140 may include, in addition to the vehicle speed sensor 141, for example, a camera, a light detection and ranging (LiDAR) device, a millimeter-wave radar, an ultrasonic sensor, a GPS sensor, an acceleration sensor, and/or a gyroscope sensor.

The vehicle speed sensor 141 is a sensor usable for calculation of vehicle speed of the vehicle 100. In the present disclosure, the "vehicle speed" means relative speed of the vehicle 100 with respect to a road surface on which the vehicle 100 is positioned. In the present embodiment, the vehicle speed sensor 141 is a wheel-speed sensor provided to each wheel attached to the vehicle 100. The vehicle speed sensor 141 outputs a pulse in accordance with rotation of the wheel. The pulse output from the sensor in accordance with rotation of the wheel in this manner is also referred to as a vehicle speed pulse. In the present embodiment, the vehicle speed pulse is a wheel speed pulse output from the vehicle speed sensor 141 as the wheel-speed sensor. The number of vehicle speed pulses is also referred to as a vehicle speed pulse number. In another embodiment, for example, the vehicle speed sensor 141 may be provided to an output shaft of a transmission or a differential of the vehicle 100. For example, in a case in which two or more vehicle speed sensors 141 are provided, only one or some of the vehicle speed sensors 141 may actually be used for calculation of the vehicle speed.

The vehicle speed pulse is usable for calculation of the vehicle speed. More specifically, as represented by the following Formula (1), the vehicle speed can be calculated as circumferential speed of the wheel based on the vehicle speed pulse number and a wheel diameter.

$$v = \pi \cdot d \cdot p/n \ ... \ (1)$$

In Formula (1), $v$ represents the vehicle speed (m/s), $d$ represents a wheel outer diameter (m), $p$ represents the vehicle speed pulse number ($s^{-1}$) per unit time, and $n$ represents a pulse number per unit rotation. The "pulse number per unit rotation" means the vehicle speed pulse number per rotation of the wheel.

Particularly, the vehicle speed pulse is usable for calculation of the vehicle speed instruction value of the vehicle 100. In the present embodiment, the vehicle speed pulse output from the vehicle speed sensor 141 is actually used for calculation of the vehicle speed instruction value. For example, the vehicle speed instruction value is used for vehicle speed display on a vehicle speedometer in the vehicle 100, and/or vehicle speed control of the vehicle 100. The vehicle speed instruction value is represented by the following Formula (2).

$$vi = \pi \cdot di \cdot p/ni \ ... \ (2)$$

In Formula (2), $vi$ represents the vehicle speed instruction value (m/s), $di$ represents a standard value (m) of the wheel outer diameter, and $ni$ represents a standard value ($s^{-1}$) of the pulse number per unit rotation. Note that the vehicle speed instruction value may be displayed, for example, on the vehicle speedometer in any unit such as km/h. A state in which the wheel outer diameter and the pulse number per unit rotation of the vehicle 100 are at the respective standard values is also referred to as an appropriate state. Based on the aforementioned Formulae (1) and (2), in the appropriate state, the vehicle speed instruction value and an actual vehicle speed match one another when spinning and slipping of the wheel are not considered.

The vehicle control device 110 includes a computer including a processor 111, a memory 112, an input/output interface 113, and an internal bus 114. The processor 111, the memory 112, and the input/output interface 113 are coupled to one another via the internal bus 114 in a bidirectionally communicable manner. The actuator group 120 and the communication device 130 are coupled to the input/output interface 113. The processor 111 executes a program PG1 stored in the memory 112, thus implementing various functions including functions as a vehicle control unit 115 and a pulse measurement unit 116.

The vehicle control unit 115 controls the actuator group 120 to cause the vehicle 100 to run. The vehicle control unit 115 can use a running control signal received from the server 200 to control the actuator group 120, thereby causing the vehicle 100 to run. The running control signal is a control signal to cause the vehicle 100 to run. In the present embodiment, the running control signal includes an acceleration and a steering angle of the vehicle 100 as parameters. In other embodiments, the running control signal may include the speed of the vehicle 100 as a parameter instead of or in addition to the acceleration of the vehicle 100.

The pulse measurement unit 116 acquires the vehicle speed pulse output from the vehicle speed sensor 141. Moreover, the pulse measurement unit 116 counts the acquired vehicle speed pulses to measure the vehicle speed pulse number, and records in the memory 112 a cumulative value of the measured vehicle speed pulse number. Information on timing at which the vehicle speed pulse is acquired is associated with each vehicle speed pulse. Therefore, the vehicle speed pulse number counted in a predetermined period, that is, the number of vehicle speed pulses output from the vehicle speed sensor 141 in the predetermined period can be identified.

The external sensor 300 is a sensor located outside the vehicle 100. The external sensor 300 in the present embodiment is a sensor that captures the vehicle 100 from outside of the vehicle 100. Specifically, the external sensor 300 is configured by a camera. The camera as the external sensor 300 captures the vehicle 100 and outputs a captured image as a detection result. The external sensor 300 includes a communication device (not illustrated) and can communicate with another device, such as the server 200, by wired or wireless communication.

The server 200 includes a computer including a processor 201, a memory 202, an input/output interface 203, and an internal bus 204. The processor 201, the memory 202, and the input/output interface 203 are coupled to one another via the internal bus 204 in a bidirectionally communicable manner. A communication device 205 to communicate with various devices located outside of the server 200 is coupled to the input/output interface 203. The communication device 205 can communicate with the vehicle 100 and a terminal device 400 owned by a user by wireless communication. Moreover, the communication device 205 can communicate with various external devices, such as each external sensor 300, by wired or wireless communication. The user means a user of the system 50 or the factory FC and includes an administrator and a worker of the factory FC. The memory 202 includes various types of information, such as a program PG2, a detection model DM, and a database DB. The processor 201 executes the program PG2 stored in the memory 202, thus implementing various functions including functions as the remote control unit 210, a pulse number acquisition unit 215, a determination unit 220, and a notification unit 225.

The remote control unit 210 acquires a detection result of the sensor and uses the detection result to generate the running control signal to control the actuator group 120 of the vehicle 100. The remote control unit 210 then transmits the running control signal to the vehicle 100 to cause the vehicle 100 to run by remote control. The remote control unit 210 may generate and output not only the running control signal but also control signals to control, for example, actuators that cause various auxiliary machines and various types of equipment including a wiper, a power window, and a light provided to the vehicle 100 to operate.

The pulse number acquisition unit 215 acquires a target pulse number that is the number of target pulses. A target pulse indicates the vehicle speed pulse output from the vehicle speed sensor 141 while the vehicle 100 runs the reference distance DS. More specifically, in the present embodiment, the target pulse number is the number of vehicle speed pulses output from the vehicle speed sensor 141 while the vehicle 100 runs in the inspection section CS. In the present embodiment, the target pulse number is acquired for one driving wheel among wheels provided to the vehicle 100. The target pulse number is represented by the following Formula (3).

$$P = (n \cdot A)/(\pi \cdot d) \,...\, (3)$$

In Formula (3), P represents the target pulse number, and A represents the reference distance (m).

The pulse number acquisition unit 215 acquires a predetermined reference pulse number. The reference pulse number corresponds to the target pulse number in a case in which the vehicle 100 runs the reference distance DS under an ideal condition. The ideal condition includes that the vehicle 100 is in the appropriate state and the vehicle 100 is not spinning or slipping. The reference pulse number may be determined as a numerical value range including a lower limit value and an upper limit value. The reference pulse number corresponds to a pulse number Ps represented by the following Formula (4) or a numerical value range including the pulse number Ps.

$$Ps = (ni \cdot A)/(\pi \cdot di) \ldots (4)$$

In the present embodiment, the reference pulse number is determined as a numerical value range. The numerical value range indicating the reference pulse number is also referred to as a "reference range". For example, the reference range is determined to be a range wide enough to appropriately allow an error in the vehicle speed inspection, within a range capable of ensuring a quality of the vehicle speed inspection. For example, the reference pulse number may be determined based on a result of an experiment where the vehicle 100 runs the reference distance DS. The experiment as used herein includes an experiment through simulation. Moreover, the reference pulse number may be determined based on the aforementioned Formula (4), for example.

In the present embodiment, the pulse number acquisition unit 215 acquires identification information of the vehicle 100 and refers to the database DB based on the acquired identification information to acquire the reference pulse number. In the database DB, the identification information of each vehicle 100 and the reference pulse number associated with each identification information is stored. For example, the identification information may be individual information of the vehicle 100, or may be information indicating a model code, a vehicle type, specifications, and/or the like of the vehicle 100. For example, the pulse number acquisition unit 215 may acquire the identification information input by the user via the terminal device 400, may acquire the identification information from a two-dimensional code given to the vehicle 100, or may acquire the identification information from a management device that manages a production step of the vehicle 100. In another embodiment, for example, the reference pulse number may be constant regardless of a type of the vehicle 100.

The determination unit 220 compares the target pulse number and the reference pulse number to one another to determine the vehicle speed abnormality.

The notification unit 225 notifies the user. In the present embodiment, when the vehicle 100 has the vehicle speed abnormality, the notification unit 225 notifies the user of the vehicle speed abnormality via the terminal device 400. The notification unit 225 transmits a control signal to the terminal device 400 to output from the terminal device 400 visual information and/or audio information indicating the vehicle speed abnormality. In another embodiment, the notification unit 225 may notify the user by using, instead of or in addition to the terminal device 400, various devices including a display device, a speaker, and an alarm device provided to the factory FC.

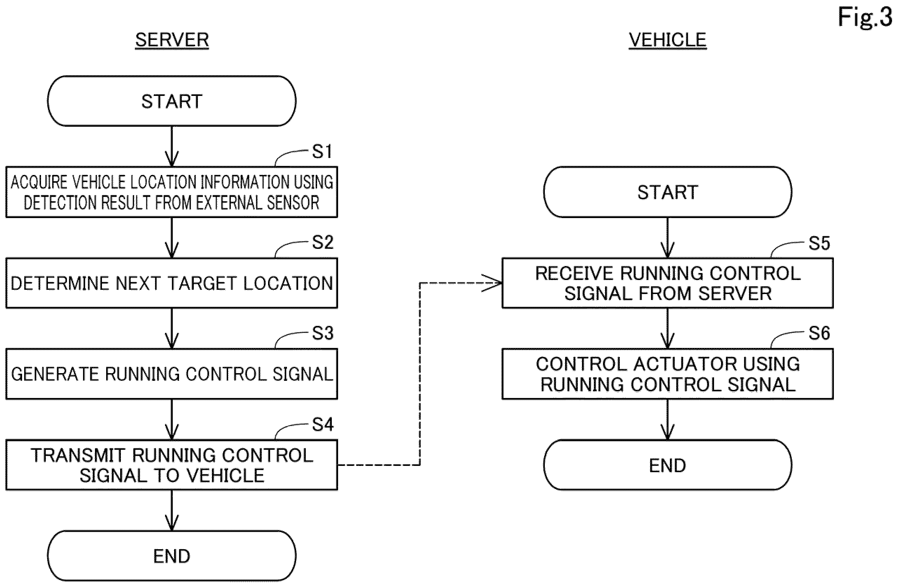

FIG. 3 is a flowchart showing a processing procedure for running control of the vehicle 100 in the first embodiment. In a procedure in Fig. 3, the processor 201 of the server 200 executes the program PG2, thus functioning as the remote control unit 210. The processor 111 of the vehicle 100 executes the program PG1, thus functioning as the vehicle control unit 115.

In step S1, the processor 201 of the server 200 acquires vehicle location information using the detection result output from the external sensor 300. The vehicle location information is locational information as a basis for generating a running control signal. In the present embodiment, the vehicle location information includes the location and orientation of the vehicle 100 in the global coordinate system GC of the factory FC. Specifically, in step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the system 50 or outside the system 50. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the system 50 in the present embodiment, it becomes possible to move the vehicle 100 without using a transport unit such as a crane or a conveyor.

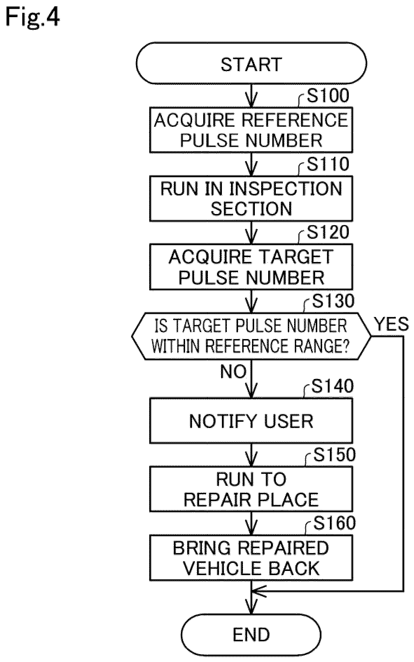

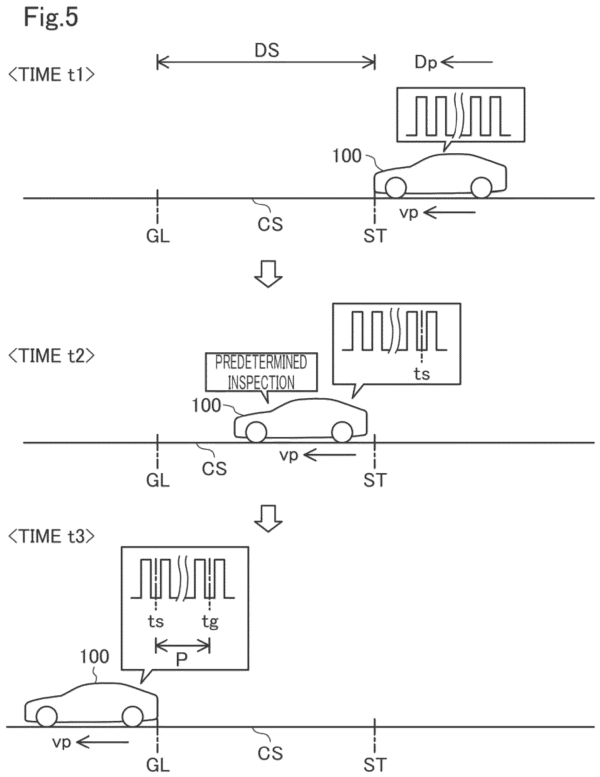

Fig. 4 is a flowchart illustrating a vehicle speed inspection method according to the present embodiment. Fig. 5 is an explanatory diagram illustrating an execution example of the vehicle speed inspection method. At Step S100, the reference pulse number of the vehicle 100 is acquired. In the present embodiment, at Step S100, the pulse number acquisition unit 215 acquires the identification information of the vehicle 100 and acquires the reference pulse number of the vehicle 100.

At Step S110, the vehicle 100 is caused to run in the inspection section CS. In the present embodiment, at Step S110, the remote control unit 210 executes the vehicle control illustrated in Fig. 3 so as to cause the vehicle 100 to linearly run from the first place PL1 toward the second place PL2 on the track TR1, thereby causing the vehicle 100 to run in the inspection section CS. At Step S110 in the present embodiment, the remote control unit 210 causes the vehicle 100 to run in the inspection section CS at a vehicle speed vp. The vehicle speed vp is vehicle speed of equal to or less than 10 km and more than zero per hour. The vehicle speed vp is not necessarily constant vehicle speed. More specifically, at Step S110, the remote control unit 210 generates the running control signal in such a manner that the vehicle speed instruction value of the vehicle 100 becomes the vehicle speed vp, and transmits the generated running control signal to the vehicle 100 to cause the vehicle 100 to run in the inspection section CS at the vehicle speed vp.

As illustrated in Fig. 5, at Step S110 in Fig. 4, first, the vehicle 100 enters the inspection section CS at time t1 in a state in which the vehicle 100 is accelerated to the vehicle speed vp. In this manner, causing the vehicle 100 to enter the inspection section CS at the vehicle speed of more than zero can suppress chattering of the vehicle speed sensor 141 at the starting point ST. Next, at time t2 after the time t1, the vehicle 100 runs in the inspection section CS at the vehicle speed vp. As illustrated in Fig. 5, the predetermined inspection is performed at at least part of a period during which the vehicle 100 runs in the inspection section CS, such as at the time t2. Then, at time t3, the vehicle 100 exits from the inspection section CS at the vehicle speed vp. In this manner, causing the vehicle 100 to exit from the inspection section CS at the vehicle speed of more than zero can suppress chattering of the vehicle speed sensor 141 at the terminal point GL.

At Step S120, the target pulse number P is acquired. More specifically, at Step S120, the pulse number acquisition unit 215 transmits to the vehicle 100 a request signal to request the target pulse number P and acquires the target pulse number P transmitted from the vehicle 100. As illustrated in Fig. 5, the target pulse number P is acquired as the pulse number output from the vehicle speed sensor 141 during a period from an enter timing ts to an exit timing tg. The enter timing ts is a timing at which the vehicle 100 enters the inspection section CS, and is detected by using the first sensor 311 illustrated in Fig. 1. The exit timing tg is a timing at which the vehicle 100 exits from the inspection section CS, and is detected by using the second sensor 312 illustrated in Fig. 1. For example, the request signal includes information indicating the enter timing ts and information indicating the exit timing tg.

At Step S130 in Fig. 4, the determination unit 220 compares the target pulse number acquired at Step S120 and the reference pulse number acquired at Step S110 to one another to determine the vehicle speed abnormality. More specifically, at Step S130, the pulse number acquisition unit 215 determines whether the target pulse number is within the reference range. If the target pulse number is not within the reference range, that is, if the target pulse number is smaller than the lower limit value of the reference range or more than the upper limit value of the reference range, the determination unit 220 determines that the vehicle 100 has the vehicle speed abnormality, and proceeds the processing to Step S140. If the target pulse number is within the reference range, the determination unit 220 ends the vehicle speed inspection. In this case, the notification unit 225 may notify the user that the vehicle 100 does not have the vehicle speed abnormality. Steps S120 and S130 in the present embodiment are executed after the exit timing tg and before a timing at which the vehicle 100 passes the intersection point IS.

A state in which the target pulse number is larger than the reference pulse number is also referred to as a first state. A state in which the target pulse number is smaller than the reference pulse number is also referred to as a second state. A state in which the target pulse number and the reference pulse number match one another is also referred to as a reference state. The vehicle 100 being in the first state means that a running distance of the vehicle 100 per vehicle speed pulse is larger than that in the reference state. Therefore, based on the aforementioned Formulae (3) and (4), in the first state, the vehicle 100 is in at least one of a state in which the wheel diameter is larger than that in the reference state and a state in which the pulse number per unit rotation is smaller than that in the reference state. As a result, based on the aforementioned Formulae (1) and (2), in the first state, the actual vehicle speed is larger than the vehicle speed instruction value. On the other hand, the vehicle 100 being in the second state means that a running distance of the vehicle 100 per vehicle speed pulse is larger than that in the reference state. Therefore, based on the aforementioned Formulae (3) and (4), in the second state, the vehicle 100 is in at least one of a state in which the wheel diameter is smaller than that in the reference state and a state in which the pulse number per unit rotation is larger than that in the reference state. As a result, based on Formulae (1) and (2), in the second state, the actual vehicle speed is smaller than the vehicle speed instruction value.

At Step S140, the notification unit 225 notifies the user of the vehicle speed abnormality. At Step S150, the remote control unit 210 causes the vehicle 100 to run to the repair place RL. More specifically, at Step S150, the remote control unit 210 executes the vehicle control illustrated in Fig. 3 to cause the vehicle 100 to run to the repair place RL along a route RR2 on the track TR2 illustrated in Fig. 1.

For example, at the repair place RL, subsequent inspection to identify a type of the vehicle speed abnormality and repair work of the identified vehicle speed abnormality are performed. For example, the subsequent inspection includes inspection on the wheel of the vehicle 100, inspection on the vehicle speed sensor 141, and inspection on the pulse measurement unit 116. When an abnormality of the wheel is found in the subsequent inspection, repair of the wheel is performed as the repair work. As the repair of the wheel, various types of maintenance, such as replacing the wheel and adjusting air pressure, are performed in such a manner that the wheel diameter falls within a standard range. When an abnormality of the vehicle speed sensor 141 is found in the subsequent inspection, repair of the vehicle speed sensor 141 is performed as the repair work. As the repair of the vehicle speed sensor 141, various types of maintenance, such as replacing the vehicle speed sensor 141, removing a foreign object, and solving faulty connection, are performed in such a manner that the pulse number per unit rotation falls within a standard range. When an abnormality of the pulse measurement unit 116 is found in the subsequent inspection, for example, repair of the vehicle control device 110 and/or repair of the program PG1 are performed as the repair work. At least part of the work included in the subsequent inspection and the repair work may be performed, for example, manually by the worker, or automatically by a work apparatus such as a robot disposed at the repair place RL. At least part of the work included in the subsequent inspection and the repair work may be performed by utilizing unmanned driving.

At Step S160, the remote control unit 210 causes the repaired vehicle 100 that has been repaired at Step S140 to run to the track TR1 by unmanned driving to bring the vehicle 100 back onto the track TR1. More specifically, at Step S160, the remote control unit 210 executes the vehicle control illustrated in Fig. 3 to cause the vehicle 100 to run from the repair place RL to the track TR1 along a route RR3 on the track TR3 illustrated in Fig. 1.

According to the above-described inspection method in the present embodiment, the target pulse number and the reference pulse number are compared to one another to determine the vehicle speed abnormality of the vehicle 100. Here, in a conventional inspection method different from the present embodiment, a comparatively large-sized roller device including a roller rotatable while supporting the wheel of the vehicle 100 is used. More specifically, in the conventional inspection method, the wheel of the vehicle 100 is rotated on the roller, and the vehicle speed instruction value of the vehicle 100 and the circumferential speed of the roller are compared to one another. On the other hand, in the present embodiment, the vehicle speed inspection can be performed without use of a roller device, and, for example, preparation of the roller device and securing of a space for installation of the roller device are unnecessary.

In the present embodiment, at least one of the target pulses is output while the vehicle 100 runs from the first place PL1 toward the second place PL2. This enables the vehicle speed inspection to be performed during position move of the vehicle 100 from the first place PL1 to the second place PL2. Therefore, as compared with a case in which such position move and the vehicle speed inspection are performed separately from one another, the position move and the vehicle speed inspection can be performed efficiently. Particularly, in the present embodiment, all the target pulses is acquired in the inspection section CS provided to the track TR1, that is, while the vehicle 100 runs from the first place PL1 toward the second place PL2. Therefore, the position move and the vehicle speed inspection can be performed more efficiently. Moreover, since at least part of the track TR1 is utilized as the inspection section CS, the factory FC can have a saved space as compared with a case in which the inspection section CS is provided outside of the track TR1.

In the present embodiment, at least one of the target pulses is output while the predetermined inspection not affecting the vehicle speed is performed. Therefore, the vehicle speed inspection and the predetermined inspection can be performed in parallel, and each inspection can be performed efficiently. Moreover, the factory FC can have a saved space as compared with a case in which a work place for the vehicle speed inspection and a work place for the predetermined inspection are provided separately from one another.

In the present embodiment, the vehicle speed pulse used for the vehicle speed inspection is output while the vehicle 100 runs at the vehicle speed of equal to or less than 10 km/m. Here, in the conventional inspection method using the roller device, the wheel of the vehicle 100 is caused to rotate on the roller in such a manner that the vehicle speed instruction value becomes comparatively high speed, such as at 40 km/m or more, or at 60 km/m or more. On the other hand, in the present embodiment, the vehicle speed inspection can be performed while the vehicle 100 runs at comparatively low speed.

In the present embodiment, when the vehicle 100 is determined to have the abnormality related to the vehicle speed, the vehicle 100 is caused to run to the repair place RL by unmanned driving. Therefore, the vehicle speed inspection and moving of the vehicle 100 to the repair place RL can be performed without relying on the occupant of the vehicle 100.

In the present embodiment, the pulse measurement unit 116 is provided to the vehicle 100. Therefore, the server 200 can acquire the target pulse number without acquisition of the vehicle speed pulse in real time by wireless communication. Accordingly, for example, the communication device 130 and the communication device 205 can have less communication performance, which can reduce costs. In another embodiment, the pulse measurement unit 116 may be provided not to the vehicle 100 but to the server 200. In this case, the pulse measurement unit 116 provided to the server 200 may acquire the vehicle speed pulse transmitted from the vehicle 100 in real time by wireless communication, and count the number of acquired vehicle speed pulses.

B. Second Embodiment

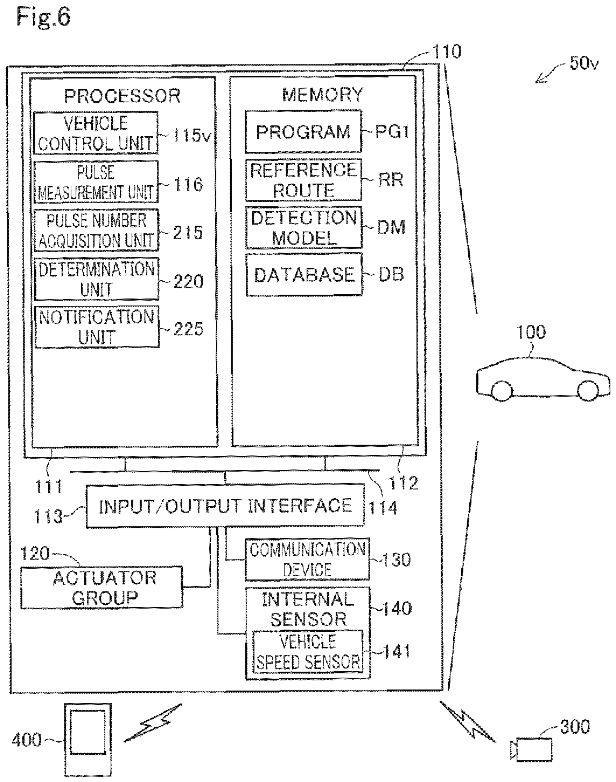

Fig. 6 is an explanatory diagram illustrating a schematic configuration of a system 50v according to a second embodiment. In the present embodiment, the system 50v is different from that of the first embodiment in that the system 50v does not include the server 200. Moreover, the vehicle 100 according to the present embodiment is runnable by autonomous control of the vehicle 100. Other configurations are the same as those of the first embodiment unless otherwise described.

In the present embodiment, the processor 111 of the vehicle control device 110 executes the program PG1 stored in the memory 112, thus functioning as a vehicle control unit 115v, the pulse number acquisition unit 215, the determination unit 220, and the notification unit 225. The vehicle control unit 115v acquires an output result of the sensor and uses the output result to generate the running control signal. The vehicle control unit 115v then outputs the generated running control signal to cause the actuator group 120 to operate, and thus can cause the vehicle 100 to run by autonomous control. In the present embodiment, the memory 112 stores, in addition to the program PG1, the detection model DM, a reference route RR, and the database DB in advance. In the present embodiment, the communication device 130 can communicate with various external devices, such as each external sensor 300 and the terminal device 400.

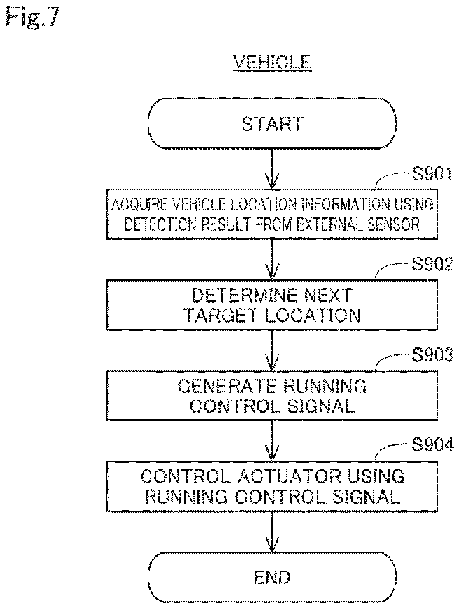

FIG. 7 is a flowchart showing a processing procedure for running control of the vehicle 100 in the second embodiment. In a procedure in Fig. 7, the processor 111 of the vehicle 100 executes the program PG1, thus functioning as the vehicle control unit 115v.

In step S901, the processor 111 of the vehicle control device 110 acquires vehicle location information using detection result output from the camera as the external sensor 300. In step S902, the processor 111 determines a target location to which the vehicle 100 is to move next. In step S903, the processor 111 generates a running control signal for causing the vehicle 100 to run to the determined target location. In step S904, the processor 111 controls the actuator group 120 using the generated running control signal, thereby causing the vehicle 100 to run by following a parameter indicated by the running control signal. The processor 111 repeats the acquisition of vehicle location information, the determination of a target location, the generation of a running control signal, and the control over the actuator in a predetermined cycle. According to the system 50v in the present embodiment, it is possible to cause the vehicle 100 to run by autonomous control without controlling the vehicle 100 remotely using the server 200.

In the present embodiment, in the vehicle speed inspection method illustrated in Fig. 4, each processing executed by the processor 201 of the server 200 in the first embodiment is executed by the processor 111 of the vehicle control device 110. For example, in the present embodiment, Steps S110, S150, and S160 in Fig. 4 are implemented by running of the vehicle 100 by autonomous control.

Also the system 50v according to the second embodiment described above can perform the vehicle speed inspection by comparing the target pulse number and the reference pulse number without use of a roller device.

C. Other Embodiments

(C1) In each embodiment described above, the vehicle 100 linearly runs in the inspection section CS. That is, the vehicle 100 runs a linear route to run the reference distance DS. However, the vehicle 100 is not limited to running the linear route, but may run any route, such as a curved route, a route combining two or more straight lines in different directions, and a route combining a straight line and a curved line, to run the reference distance DS.

(C2) In each embodiment described above, the target pulse is acquired for one driving wheel provided to the vehicle 100, but it is not limited to this. For example, the target pulse number may be acquired for any one or more wheels among wheels provided to the vehicle 100, and each target pulse number may be used for determination of the vehicle speed abnormality. In the case in which the target pulse number is acquired for respective one of a plurality of wheels, for example, an average value of the target pulse numbers for the respective wheels may be compared to the reference pulse number, or each target pulse number may be compared to the reference pulse number.

(C3) In each embodiment described above, the processor 201 may have a function as a success/failure determination unit. The success/failure determination unit determines success or failure of the vehicle speed inspection based on left-right difference that is difference in the pulse number between the left wheel and the right wheel during running in the inspection section CS. For example, the success/failure determination unit may determine that the vehicle speed inspection is successful when the left-right difference is equal to or less than a predetermined reference difference, and determine that the vehicle speed inspection is failed when the left-right difference is larger than the reference difference. For example, the reference difference is defined as the left-right difference in a case in which the vehicle 100 runs in the inspection section CS along an expected route. For example, in the case in which the vehicle 100 is caused to linearly run in the inspection section CS as in the first embodiment, the reference difference may be set to zero. Prior to the determination of the vehicle abnormality at Step S130 in Fig. 4, the success/failure determination unit may determine success or failure of the vehicle speed inspection, and may proceed the processing to Step S130 when the vehicle speed inspection is successful. For example, the success/failure determination unit may complete the vehicle speed inspection without execution of Step S130 when the vehicle speed inspection is failed. When the left-right difference is larger than the reference difference, there is a high probability of occurrence of difference between an actual running distance and the reference distance DS in the inspection section CS due to deviation of an actual running route of the vehicle 100 from the expected route. Occurrence of such difference makes appropriate determination of the vehicle speed abnormality difficult. Determining success or failure of the vehicle speed inspection prior to determination of the vehicle abnormality can suppress execution of determination of the vehicle speed abnormality with comparatively large left-right difference, and the vehicle speed inspection can more appropriately be performed.

(C4) In each embodiment described above, at least one of the target pulses is output while the vehicle 100 runs on the track TR1 from the first place PL1 toward the second place PL2. However, for example, all the target pulses may be output at the first place PL1 and/or the second place PL2, or all the target pulses may be output while the vehicle 100 runs from the second place PL2 toward the first place PL1.

(C5) In each embodiment described above, at least one of the target pulses is output while the predetermined inspection is performed. However, all the target pulses may be output while the predetermined inspection is not performed. That is, the predetermined inspection is not necessarily performed while the vehicle 100 runs the reference distance DS.

(C6) In each embodiment described above, the target pulse is output while the vehicle 100 runs at the vehicle speed of equal to or less than 10 km/h. However, the target pulse may be output while the vehicle 100 runs at the vehicle speed of more than 10 km/h.

(C7) In each embodiment described above, the target pulse is output while the vehicle 100 runs by unmanned driving. However, at least one of the target pulses may be output while the vehicle 100 runs by manned driving.

(C8) In each embodiment described above, moving of the vehicle 100 to the repair place RL is implemented by running by unmanned driving, but it is not limited to this. For example, moving of the vehicle 100 to the repair place RL may be implemented by manned driving, transport using various devices, such as a conveyor and a robot, or manual transport by the worker. The vehicle speed abnormality is not necessarily repaired in the vehicle speed inspection, but, for example, the vehicle 100 may be dismantled without the vehicle speed abnormality getting repaired.

(C9) In each embodiment described above, in the system 50, various functional units including the pulse number acquisition unit 215, the determination unit 220, and the notification unit 225 may be provided to the vehicle 100. In this case, as described in the second embodiment, all of the pulse number acquisition unit 215, the determination unit 220, and the notification unit 225 may be provided to the vehicle 100, or one or some of these functional units may be provided to the vehicle 100. In the system 50, one or some or all of these functional units may be provided to, for example, a device outside of the server 200 and the vehicle 100.

(C10) In each of the above-described embodiments, the external sensor is not limited to the camera but may be the distance measuring device, for example. The distance measuring device is a light detection and ranging (LiDAR) device, for example. In this case, detection result output from the external sensor 300 may be three-dimensional point cloud data representing the vehicle 100. The server 200 and the vehicle 100 may acquire the vehicle location information through template matching using the three-dimensional point cloud data as the detection result and reference point cloud data, for example.

(C11) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.

(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(C12) In the above-described second embodiment, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(C13) In the above-described second embodiment, the vehicle 100 acquires vehicle location information using detection result from the external sensor. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control the actuator group 120 using the generated running control signal. In this case, the vehicle 100 is capable of running without using any detection result from an external sensor. The vehicle 100 may acquire target arrival time or traffic congestion information from outside the vehicle 100 and reflect the target arrival time or traffic congestion information in at least one of the route and the running control signal. The functional configuration of the system 50v may be entirely provided at the vehicle 100. Specifically, the processes realized by the system 50v in the present disclosure may be realized by the vehicle 100 alone.

(C14) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(C15) In each of the above-described embodiments, the vehicle 100 is simply required to have a configuration to become movable by unmanned driving. The vehicle 100 may embodied as a platform having the following configuration, for example. The vehicle 100 is simply required to include at least the vehicle control device 110 and the actuator group 120 in order to fulfill three functions including "run," "turn," and "stop" by unmanned driving. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory FC, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(C16) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(C17) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

In each of the embodiments described above, some or all of the functions and processes that are implemented by software may also be implemented by hardware. Further, some or all of the functions and processes that are implemented by hardware may also be implemented by software. Examples of the hardware used to implement various functions in each of the embodiments described above include various circuits, such as integrated circuits and discrete circuits.

The disclosure is not limited to any of the embodiment and its modifications described above but may be implemented by a diversity of configurations without departing from the scope of the disclosure. For example, the technical features of any of the above embodiments and their modifications corresponding to the technical features of each of the aspects described in SUMMARY may be replaced or combined appropriately, in order to solve part or all of the problems described above or in order to achieve part or all of the advantageous effects described above. Any of the technical features may be omitted appropriately unless the technical feature is described as essential in the description hereof.

**Claims**

1. An inspection method comprising:

   acquiring a target pulse number indicating a number of a plurality of pulses in accordance with rotation of a wheel of a vehicle (100), the plurality of pulses being output from a sensor while the vehicle (100) runs a predetermined reference distance (DS); and

comparing the acquired target pulse number and a predetermined reference pulse number to determine an abnormality related to vehicle (100) speed of the vehicle (100).

2. The inspection method according to claim 1, wherein at least one of the plurality of pulses is output while the vehicle (100) runs from a first place (PL1) toward a second place (PL2), the first place (PL1) being a place at which first work related to the vehicle (100) is performed, the second place (PL2) being a place at which second work related to the vehicle (100) is performed, the second work being subsequent to the first work.

3. The inspection method according to claim 1, wherein at least one of the plurality of pulses is output while inspection related to the vehicle (100) and not affecting the vehicle (100) speed is performed.

4. The inspection method according to claim 1, wherein the plurality of pulses is output while the vehicle (100) runs at the vehicle (100) speed equal to or less than 10 km/h.

5. The inspection method according to any one of claims 1 to 4, further comprising

when the vehicle (100) has the abnormality, causing the vehicle (100) to run by unmanned driving to a repair place (RL) at which the abnormality is to be repaired, wherein the plurality of pulses is output while the vehicle (100) runs by the unmanned driving.

Fig.1

FC

PL1

IS

50

300

DS

Dp

PL2

GC

100

ST

RR

GL

TR1

Y

Z⊙——X

300

CS

RR2

TR3

311

312

TR2

300

RR3

200

RL

300

Fig.2

**Fig.3**

SERVER

START

→ S1
ACQUIRE VEHICLE LOCATION INFORMATION USING DETECTION RESULT FROM EXTERNAL SENSOR

→ S2
DETERMINE NEXT TARGET LOCATION

→ S3
GENERATE RUNNING CONTROL SIGNAL

→ S4
TRANSMIT RUNNING CONTROL SIGNAL TO VEHICLE

END

VEHICLE

START

→ S5
RECEIVE RUNNING CONTROL SIGNAL FROM SERVER

→ S6
CONTROL ACTUATOR USING RUNNING CONTROL SIGNAL

END

Fig.4

```
                    ┌─────────────────┐
                    │      START      │
                    └─────────────────┘
                             │    ┌S100
                             ▼
                  ┌───────────────────────┐
                  │  ACQUIRE REFERENCE    │
                  │     PULSE NUMBER      │
                  └───────────────────────┘
                             │    ┌S110
                             ▼
                  ┌───────────────────────┐
                  │   RUN IN INSPECTION   │
                  │       SECTION         │
                  └───────────────────────┘
                             │    ┌S120
                             ▼
                  ┌───────────────────────┐
                  │   ACQUIRE TARGET      │
                  │    PULSE NUMBER       │
                  └───────────────────────┘
                             │    ┌S130
                             ▼
              ╱─────────────────────────────╲
             ╱  IS TARGET PULSE NUMBER       ╲  YES
             ╲  WITHIN REFERENCE RANGE?      ╱────┐
              ╲─────────────────────────────╱     │
                          NO│                      │
                            ▼    ┌S140             │
                  ┌───────────────────────┐        │
                  │     NOTIFY USER       │        │
                  └───────────────────────┘        │
                             │    ┌S150            │
                             ▼                     │
                  ┌───────────────────────┐        │
                  │      RUN TO           │        │
                  │   REPAIR PLACE        │        │
                  └───────────────────────┘        │
                             │    ┌S160            │
                             ▼                     │
                  ┌───────────────────────┐        │
                  │   BRING REPAIRED      │        │
                  │    VEHICLE BACK       │        │
                  └───────────────────────┘        │
                             │                     │
                             ▼◄────────────────────┘
                    ┌─────────────────┐
                    │      END        │
                    └─────────────────┘
```

Fig.5

<TIME t1>

DS

Dp

100

CS

GL          ST

vp

<TIME t2>

PREDETERMINED
INSPECTION

ts

100

GL     CS          ST

vp

<TIME t3>

ts     tg

P

100

vp

GL          CS          ST

Fig.6

Fig.7

VEHICLE

```
┌─────────────────────────────┐
│            START            │
└─────────────────────────────┘
               │
               ▼                    ⌐ S901
┌─────────────────────────────────────┐
│ ACQUIRE VEHICLE LOCATION INFORMATION USING │
│ DETECTION RESULT FROM EXTERNAL SENSOR │
└─────────────────────────────────────┘
               │
               ▼                    ⌐ S902
┌─────────────────────────────────────┐
│          DETERMINE NEXT             │
│          TARGET LOCATION            │
└─────────────────────────────────────┘
               │
               ▼                    ⌐ S903
┌─────────────────────────────────────┐
│          GENERATE RUNNING           │
│          CONTROL SIGNAL             │
└─────────────────────────────────────┘
               │
               ▼                    ⌐ S904
┌─────────────────────────────────────┐
│       CONTROL ACTUATOR USING        │
│       RUNNING CONTROL SIGNAL        │
└─────────────────────────────────────┘
               │
               ▼
┌─────────────────────────────┐
│             END             │
└─────────────────────────────┘
```

**EUROPEAN SEARCH REPORT**

Application Number

EP 25 18 9893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 42 17 675 A1 (SEMMLER GMBH [DE]) 3 December 1992 (1992-12-03) | 1,4 | INV. G01P3/64 |
| Y | * columns 2-5; figures 1-4 * | 2,3,5 | G01P21/02 G01M17/007 |
| X | DE 10 2015 001364 A1 (DAIMLER AG [DE]) 27 August 2015 (2015-08-27) * paragraphs [0002], [0007] - [0010], [0017], [0018]; figure 1 * | 1 | |
| Y | WO 2024/080271 A1 (TOYOTA MOTOR CO LTD [JP]) 18 April 2024 (2024-04-18) * paragraphs [0014], [0046], [0081]; figures 1-12 * | 2 | |
| Y | US 2020/361480 A1 (RODRIGUEZ BRAVO CESAR AUGUSTO [CR] ET AL) 19 November 2020 (2020-11-19) * paragraphs [0025], [0038] - [0040]; figures 1-9 * | 3,5 | |

TECHNICAL FIELDS
SEARCHED (IPC)

G01P
G01M

The present search report has been drawn up for all claims

| Place of search | Date of completion of the search | Examiner |
|---|---|---|
| Munich | 8 December 2025 | Schwarz, Cornelia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 18 9893

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2025

| Patent document cited in search report | | Publication date | Patent family member(s) | | Publication date |
|---|---|---|---|---|---|
| DE 4217675 | A1 | 03-12-1992 | NONE | | |
| DE 102015001364 | A1 | 27-08-2015 | NONE | | |
| WO 2024080271 | A1 | 18-04-2024 | CN | 120076971 A | 30-05-2025 |
| | | | EP | 4603354 A1 | 20-08-2025 |
| | | | WO | 2024080271 A1 | 18-04-2024 |
| US 2020361480 | A1 | 19-11-2020 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 2017538619 W